# EUROPEAN PATENT SPECIFICATION

(11) **EP 2 194 436 B1**
(45) Date of publication and mention of the grant of the patent: **27.07.2011**
(21) Application number: 08020883.8
(22) Date of filing: 02.12.2008
(51) Int. Cl.: G05G 1/06

(54) **Operation lever device, in particular in the passenger compartment of a motor vehicle**
Hebelvorrichtung, insbesondere im Innenraum eines Kraftfahrzeuges
Dispositif de levier, en particulier dans l'habitacle d'un véhicule automobile

(43) Date of publication of application: 09.06.2010
(73) Proprietor: Autoliv Development AB, 447 83 Vårgårda (SE)
(72) Inventor: Granger, Jean- Francois, 86180 Buxerolles (FR); Doursoux, Hugues, 86190 Latille (FR)
(74) Representative: Müller Verweyen

(56) References cited:
- WO-A-2007/049419
- DE-A1- 3 919 019
- FR-A- 2 910 142
- FR-A- 2 910 651
- GB-A- 1 176 015
- GB-A- 2 253 446
- US-A- 3 480 310
- US-A1- 2005 081 331

## Description

The invention relates to an operation lever device, in particular in the passenger compartment of a motor vehicle, according to the preamble of claim 1.

An operation lever device for example for a side brake of an automotive vehicle is disclosed in US 5 588 329. The lever shaft is inserted into a support body by a translational pushing movement until it is axially locked by a snap-fit connection; in this state the lever shaft is rotationally fixed relative to the lever shaft by means of rotation-prohibiting elements. Afterwards the lever shaft together with the support body is inserted into the knob by a further translational pushing movement until it is axially and rotationally locked relative to the knob by another snap-fit connection. In order to accomplish a tight fit for the overall knob and lever engagement, accurate component tolerances are required which leads to expensive material and tools, as well as high mounting forces to overcome friction between the components. Furthermore, the fixation arrangement cannot be easily accessed and therefore dismounting the knob from the lever shaft by disengaging the fixation arrangement is difficult.

Described within US 5 588 329 is a further prior art of a mounting construction for an operating knob comprising a male screw at the tip end of a shift lever and a female screw in a shift knob. The shift knob is secured to the shift lever by threading the shift knob all the way into the tip end portion of the shift lever which is very time-consuming.

FR 2 910 651 A, US 2005 081331 A, GB 1 176 015 A, FR 2 910 142 A and GB 2 253 446 A disclose various operation lever devices according to the preamble of claim 1.

The object of the invention is to provide an operation lever device which does not require particular accurate component tolerances and can be quickly mounted.

The invention solves this problem with the features of claim 1. The insertion of the lever shaft into the bore of the knob with a relative translational pushing movement and the following rotational movement for engaging said fixing arrangement can be done very quickly in comparison to a pure thread connection. On the other hand, the fixing arrangement being based on a rotational movement, instead of the conventional translational movement, can be realised with average component tolerances which reduces costs and efforts.

It is understood that inserting the lever shaft into the bore of the knob can also be performed by putting the knob over the lever shaft.

Preferably the engagement of the fixing arrangement by the rotational movement is realised by a first fixation element coupled to said lever shaft and a second fixation element coupled to said knob, said fixation elements being rotatable relative to each other from an unfixed position, allowing insertion of said lever shaft into said bore, to a fixed position wherein said fixation elements engage each other in order to prevent rotation between said knob and said lever shaft.

Preferably the fixing elements comprise a locking means, preferably comprising at least one pair of clip members acting between the fixation elements, adapted to lock said fixing elements with respect to relative rotation in said fixed position.

A preferred application of the operation lever device is a gear shift lever. Other applications include a handbrake lever, a "joystick" for controlling for example GPS, mirrors, music player, etc., or other operation lever devices to be operated by an occupant of a motor vehicle.

In the following the invention shall be illustrated on the basis of preferred embodiments with reference to the accompanying drawings, in which:
- Fig. 1: shows a perspective view of a knob;
- Fig. 2: shows a perspective view of a ring element;
- Fig. 3: shows a perspective view of a lever shaft;
- Fig. 4: shows a cross-sectional view of the knob with mounted ring element;
- Fig. 5: shows a side view of the lever shaft;
- Fig. 6: shows a schematic view of the knob with inserted lever shaft;
- Fig. 7: shows a perspective view of the bottom part of the knob with inserted lever shaft;
- Fig. 8: shows a view from below onto the knob with inserted lever shaft in a cross-section through the ring ele- ment;
- Fig. 9: shows a perspective view on the bottom part of the knob with fixed lever shaft;
- Fig. 10: shows a view from below onto the knob with fixed lever shaft in a cross-section through the ring element;
- Fig. 11: shows a cross-sectional view of the knob with fixed lever shaft;
- Fig. 12: shows a cross-sectional view of a knob and a lever shaft in a second embodiment;
- Fig. 13: shows a perspective view of the lever shaft of Fig. 12;
- Fig. 14: shows an enlarged portion of the lever shaft in the region of a collar element;
- Fig. 15: shows a cross-sectional view of the knob with half in- serted lever shaft;
- Fig. 16: shows a cross-sectional view of the knob with fully inserted lever shaft;
- Fig. 17: shows a cross-sectional view of the knob with fixed lever shaft; and
- Fig. 18: shows a perspective view of the knob with fixed lever shaft.

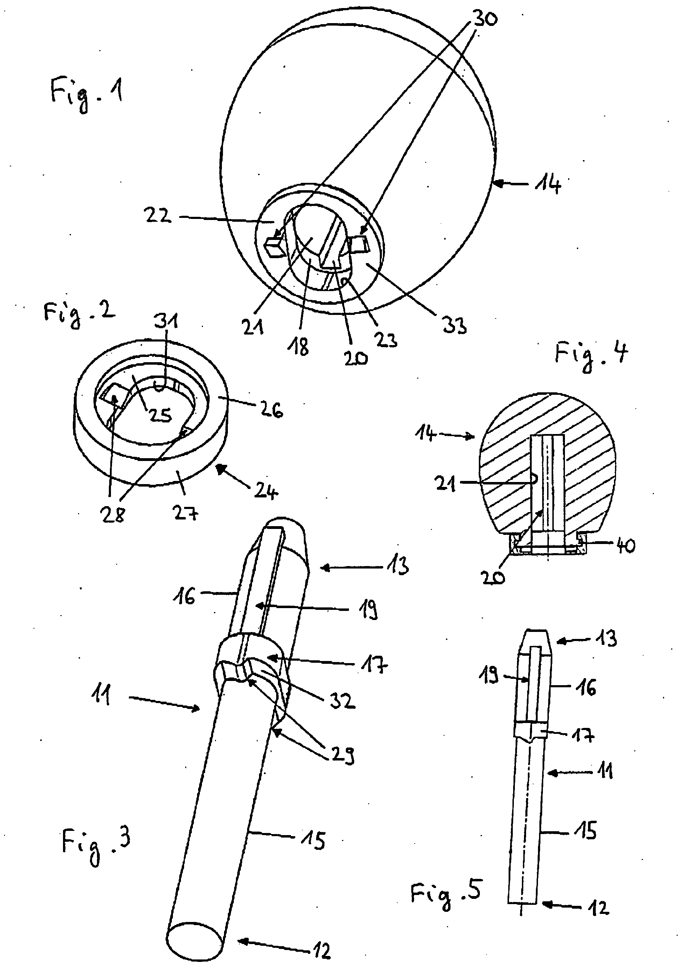

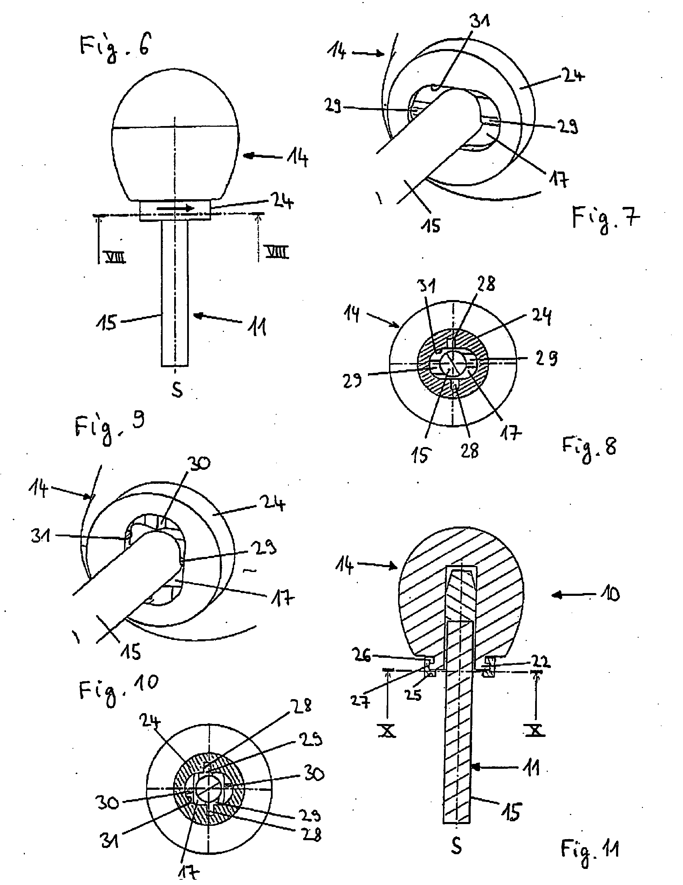

In the first embodiment shown in Figs. 1 to 11, which is not within the scope of the present invention, the operation lever device 10 (see figure 11) comprises a lever shaft 11 with a first end 12 connected to the control arrangement not shown in the figures, for example a gearshift control, and a second end 13 to which a knob 14 can be fixed. The knob 14 allows a user, for example a vehicle occupant, to manually operate the control arrangement by the displacing the lever shaft 11.

The lever shaft 11 has a free lower section 15 and an upper section 16 designed to be received in a central bore 21 of the knob 14. The bore 21 is a blind bore in this embodiment. The free section 15 of the lever shaft 11 is separated from the upper section 16 by a collar 17 fixedly connected to the lever shaft 11, or formed in one piece with the lever shaft 11. The upper section 16 of the lever shaft 11 comprises a pair of longitudinal ribs 19 engaging corresponding longitudinal grooves 20 provided in the walls forming the bore 21. The ribs 19 and the grooves 20 may in general be placed anywhere along the upper section 16 and here extend essentially over the whole length of the upper section 16 of the lever shaft 11. Each pair of engaging rib 19 and groove 20 forms a pair of rotation-prohibiting elements prohibiting rotation of the knob 14 relative to the lever shaft 11 when the lever shaft 11 is deceived in the bore 21. The ribs 19 and grooves 20 also form linear guides for guiding the insertion of the lever shaft 11 into the bore 21. The collar 17 has an oval, or more generally non-circular, outer shape.

Alternatively of course the ribs 19 can be provided in the bore 21 and the groove 20 can be provided on the lever shaft 11.

At the lower end of the bore 21 the knob 14 comprises a circular, plate-like flange element 22 arranged perpendicularly to the shaft axis S. The flange element 22 comprises a central through-hole 23 forming an insertion opening for the lever shaft 11. The shape of the through-hole 23 is designed such that it allows the insertion of the upper section 16 of the lever shaft 11 including the ribs 19 and in this case also the collar 17. Preferably the shape of the through-hole 23 corresponds to the outer shape of the collar 17. At its outer edge the flange element 22 is freely protruding outwards forming a flange, as may be best seen in figures 4 and 11. A ring element 24 shown on its own in figure 2 is rotatably and permanently coupled to the knob 14 at the outer edge of the flange element 22. To this end the ring element 24 comprises a lower wall 25, an upper wall 26, and an outer wall 27 connecting the lower wall 25 and the upper wall 26 in U-form, such that a groove 28 is built between the walls 25 to 27, see again figures 4 and 11. The outer edge of the circular flange element 22 is received in the circumferential groove 40 of the ring element 24, such that the ring element 24 can be rotated around its centre but cannot be removed from the knob 14. The ring element 24 comprises a central through-hole 31 preferably with a noncircular, oval shape which again is designed such that it allows the insertion of the upper section 16 of the lever shaft 11 including the ribs 19 and in this case also the collar 17. Preferably the shape of the through-hole 31 is identical or essentially identical to the shape of the through-hole 23 of the flange element 22.

The ring element 24 comprises at least one clip member, preferably a pair of clip members 28, here in the form of grooves, arranged on opposite sides of the ring element 24. The collar 17 of the lever shaft 11 comprises a pair of corresponding clip members 29, here in the form of protrusions, provided for engagement with the clip members 28 of the ring element 24, as will be described later.

The ring element 24 is preferably made of plastic, injection moulded onto the flange element 22, which allows a cost-effective production of the groove 28. The flange element 22 comprises a pair of inverted clip members 30 arranged on opposite sides of the flange element 22 which automatically generate the clip members 28 in the above-mentioned moulding process. Preferably the ring element 24 and the flange element 22 are made of different, incompatible materials such that the ring element 24 is easily rotatable relative to the flange element 22 after moulding the ring element 24 onto the flange element 22. However, the ring element 24 and the flange element 22 may also be made of the same material. Expediently the ring element 24 is flexible to some extent such that the lower wall 25 can be bent downwards by the inverted clip members 30 during rotation of the ring element 24. Preferably the ring element 24 is made of a softer material than the flange element 22.

Alternatively the ring element 24 can be pre-fabricated and for example be clipped over the flange element 22 in an embodiment not shown in the figures. In this case there is no need for the inverted clip members 30.

Mounting of the operation lever device 10 is described in the following. First it has to be made sure that the ring element 24 is in a rotational position which allows insertion of the lever shaft 11. In the present embodiment this is automatically ensured because after the moulding of the ring 24 onto the flange element 22 the through-holes 23, 31 are arranged congruent and unintended rotation of the ring element 24 is prohibited by engagement of the inverse clip members 30 and the clip members 28.

The lever shaft 11 is inserted into the bore 21 of the knob 14 and pushed to shift it therein, the ribs 19 being linearly guided in the grooves 20, until the rear face of the collar 17 abuts against abutting surfaces 18 of the knob 14 provided at the lower end of the bore 21. In this state which is shown in figures 6 to 8 the front surface 32 of the collar element 17 and the front surface 33 of the flange element 22 are aligned relative to each other to form a continuous surface.

After the lever shaft 11 is fully received in the bore 21, the ring element 24 is manually turned by the operator, here in the clockwise direction as indicated by the solid arrow in figure 6. At the beginning the clip members 28 are disengaged from the inverse clip members 30. Then the ring member 24 is rotated by 90° until the clip members 28 of the ring element 24 come into engagement with the clip members 29 of the flange element 22. In this state, which is shown in figures 9 to 11, the collar 17 abuts against the lower wall 25 of the ring element 24 in the region of the clip members 28. In this manner the ring element 24 prohibits axial movement of the lever shaft 11, such that the lever shaft 11 is axially fixed relative to the knob 14. In the locked state the ring element 24 is held in position and prohibited from unintentionally rotate back by engagement of the clip members 28 with the clip members 29. In this embodiment, therefore, the first fixation element mentioned in the claims is formed by the collar 17 carrying the clip members 30, and the second fixation element is formed by the ring element 24 carrying the clip members 28. Preferably gap, material properties and geometry are optimised for a compromise between clip force and rotation effort.

As is evident from the above, the operation lever device may be simply dismounted by turning the ring element 24 about 90° in the opposite direction, here counter-clockwise, and then redraw the lever shaft 11 from the bore 21 to separate the lever shaft 11 from the knob 14.

Alternatively only one pair of clip members 28, 29, or more than two pairs of clip members 28, 29, may be provided. Accordingly, the rotation angle between the unfixed position and the fixed position may be chosen different from 90°. Preferably this rotation angle is less than 360°, more preferably less than 180°, with respect to mounting speed.

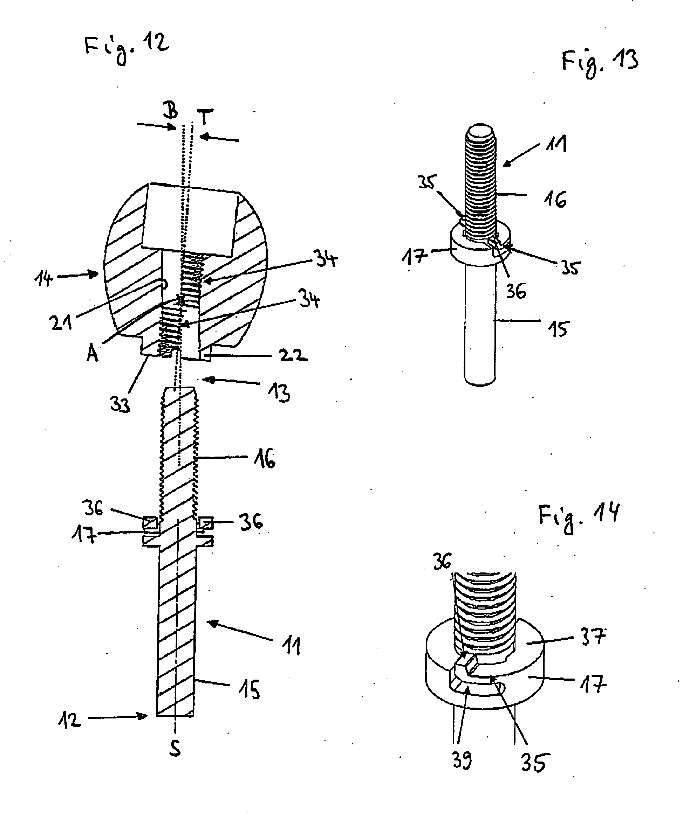

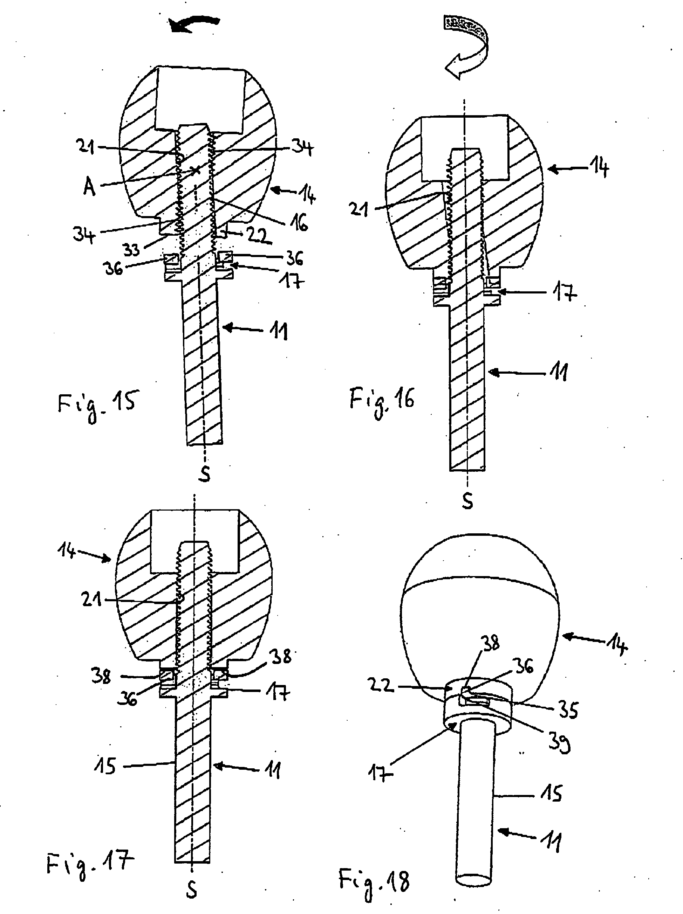

A second embodiment of the invention is depicted in figures 12. to 18. Here the upper section 16 of the lever shaft 11 to be inserted in the bore 21 of the knob 14 is threaded essentially over its whole length. The bore 21 is a through-bore and is provided with a longitudinal thread 34, the axis T of which is slightly tilted against the axis B of the bore 21 and around the axis A, which is arranged perpendicular to the drawing plane in Figs. 12 and 15, by an angle α of some degree. The tilted arrangement of the thread 34 allows inserting the threaded portion 16 of the lever shaft 11 freely into the bore 21 by a purely translation or pushing movement along the bore axis S without engagement of the threaded portion 16 of the lever shaft 11 with the thread 34 of the bore 21.

The collar 17 of the lever shaft 11 comprises at least one clip member, preferably a pair of elastic clip members 35 arranged at opposite sites of the collar 17 on the rear surface 37 of the collar element 17. Each clip member 35 is provided with a locking nose 36 at a free end thereof. A pair of corresponding recesses 38 provided at the front surface 33 of the flange element 22 is designed to receive the locking noses 36 in the locked state. In the collar 17 beneath each clip member 35 a cavity 39 is provided for receiving the corresponding clip member 35 when the latter is bent down during rotation.

Mounting of the operation lever device 10 according to second embodiment is described in the following. The lever shaft 11 is inserted into the bore 21 of the knob 14 and linearly shifted therein along the bore axis B, see figure 15, until the rear face 37 of the collar 17 abuts against the front surface 33 of the flange element 22 of the knob 14. In this state the mounting operator first tilts the knob 14 around the axis A, as is indicated in figure 15 by the solid arrow, in order to bring the threaded portion 16 of the lever shaft 11 into engagement with the thread 34 provided in the walls of the bore 21. By the tilting of the knob 14 the thread axis T is brought into congruence with the shaft axis S.

In a second step the mounting operator turns the knob 14 around an angle of 90° around the shaft axis S, as indicated by the solid arrow in figure 16, until the locking noses 36 snap into the corresponding recesses 38. It may be necessary to push the knob 14 downwards during rotation to press the elastic clip member 35 into the cavity 39. In the snapped-in state, which is shown in figures 17 and 18, rotation of the knob 14 relative to the lever shaft 11 is prohibited by the locking noses 36 engaging the recesses 38, and axial withdrawal of the lever shaft 11 from the bore 21 is prohibited by the engagement of the threaded portion 16 of the lever shaft with the thread 34 in the bore 21. In this embodiment, therefore, the first fixation element mentioned in the claims is formed by the collar 17 carrying the clip members 35, and the second fixation element is formed by the flange element 22 carrying the recesses 38.

An alternative to the threads 34 in the bore 21 is a spiral shape, which may be advantageous with respect to tool complexity if the knob is moulded without an insert, for example in the case of a metal knob. This alternative is not within the scope of the present invention.
The second embodiment preferably has a locator not shown in the figures, for example a pin on the knob 14 and a slot on the collar 17, or vice versa, to prevent mounting of the knob 14 wrong by 180°.

The knob 14 may be of plastic, wood or steel. The lever of 14 is preferably of steel. The ring element 14 and the clip members are preferably made of plastic.

## Claims

1. An operation lever device (10), in particular in the passenger compartment of a motor vehicle, comprising a lever shaft (11) connected to a control arrangement at a first end (12), a knob (14) comprising a bore (21) provided to receive said lever shaft (11) at a second end (13), and a fixing arrangement (17, 22, 36, 38) holding said knob (14) in a rotationally and axially fixed manner relative to said lever shaft (11) when said lever shaft (11) is received in said bore (21), wherein said lever shaft (11) is adapted to be inserted into the bore (21) with a translational pushing movement of said lever shaft (11) and said knob (14) relative to each other, and the fixing arrangement (17, 22, 36, 38) is adapted to be brought into engagement by a rotational movement of said knob (14) when said lever shaft (11) is received in said bore (21), **characterized in that** said lever shaft (11) comprises a threaded portion (16) for engagement with a thread (34) provided in said bore (21), wherein said thread (34) has a thread axis (T) which is tilted with respect to the bore axis (B).

2. An operation lever device according to claim 1, wherein said fixing arrangement comprises a first fixation element (17) coupled to said lever shaft (11) and a second fixation element (22) coupled to said knob (14), said fixation elements (17, 22) being rotatable relative to each other from an unfixed position, allowing insertion of said lever shaft (11) into said bore (21), to a fixed position wherein said fixation elements (17, 22) engage each other in order to prevent rotation between said knob (14) and said lever shaft (11).

3. An operation lever device according to claim 2, wherein said fixing elements (17, 22) comprise locking means (35, 38) adapted to lock said fixing elements with respect to relative rotation in said fixed position.

4. The operation lever device according to claim 3, wherein said locking means (35, 38) comprises at least one clip member.

5. The operation lever device according to any one of the preceding claims, wherein said knob (14) comprises a flange element (22).

6. The operation lever device according to anyone of the preceding claims, wherein said fixation arrangement comprises a collar element (17) fixedly connected to said lever shaft (11).

7. The operation lever device according to claim 6, wherein said collar element (17) comprises at least one clip member (35).

8. The operation lever device according to anyone of the preceding claims, wherein said operation lever device (10) is a gearshift lever.

## Patentansprüche

1. Eine Bedienhebelvorrichtung (10), insbesondere im Innenraum eines Kraftfahrzeuges, umfassend einen an einem ersten Ende (12) mit einer Schaltanordnung verbundenen Hebelschaft (11), einen Knauf (14) umfassend eine zur Aufnahme des Hebelschafts (11) an einem zweiten Ende (13) vorgesehene Bohrung (21), und eine Fixieranordnung (17, 22, 36, 38), welche den Knauf (14) relativ zu dem Hebelschaft (11) drehfest und axial fest hält, wenn der Hebelschaft (11) in der Bohrung (21) aufgenommen ist, wobei der Hebelschaft (11) dazu eingerichtet ist, mit einer translatorischen Schiebebewegung des Hebelschafts (11) und des Knaufs (14) relativ zueinander in die Bohrung (21) eingeschoben zu werden, und die Fixieranordnung (17, 22, 36, 38) dazu eingerichtet ist, bei Aufnahme des Hebelschafts (11) in der Bohrung (21) durch eine Drehbewegung des Knaufes (14) in Eingriff gebracht zu werden, **dadurch gekennzeichnet, dass** der Hebelschaft (11) einen Gewindeabschnitt (16) zum Eingriff in ein in der Bohrung (21) vorgesehenes Gewinde (34) umfasst, wobei das Gewinde (34) eine in Bezug auf die Bohrungsachse (B) gekippte Gewindeachse (T) aufweist.

2. Eine Bedienhebelvorrichtung nach Anspruch 1, wobei die Fixieranordnung ein an den Hebelschaft (11) gekoppeltes erstes Fixierelement (17) und ein an den Knauf (14) gekoppeltes zweites Fixierelement (22) umfasst, wobei die Fixierelemente (17, 22) von einer nicht fixierten Stellung, welche das Einschieben des Hebelschafts (11) in die Bohrung (21) ermöglicht, zu einer fixierten Stellung, in welcher die Fixierelemente (17, 22) sich miteinander in Eingriff befinden, um eine Drehung zwischen dem Knauf (14) und dem Hebelschaft (11) zu verhindern, relativ zueinander drehbar sind.

3. Eine Bedienhebelvorrichtung nach Anspruch 2, wobei die Fixierelemente (17, 22) Blockiermittel (35, 38) umfassen, welche dazu eingerichtet sind, die Fixierelemente in der fixierten Position in Bezug auf eine Relativdrehung zu blockieren.

4. Die Bedienhebelvorrichtung nach Anspruch 3, wobei die Blockiermittel (35, 38) mindestens ein Clipelement umfassen.

5. Die Bedienhebelvorrichtung nach einem der vorangehenden Ansprüche, wobei der Knauf (14) ein Flanschelement (22) umfasst.

6. Die Bedienhebelvorrichtung nach einem der vorangehenden Ansprüche, wobei die Fixieranordnung ein fest mit dem Hebelschaft (11) verbundenes Kragenelement (17) umfasst.

7. Die Bedienhebelvorrichtung nach Anspruch 6, wobei das Kragenelement (17) mindestens ein Clipelement (35) umfasst.

8. Die Bedienhebelvorrichtung nach einem der vorangehenden Ansprüche, wobei es sich bei der Bedienhebelvorrichtung (10) um einen Schalthebel handelt.

## Revendications

1. Un dispositif à levier de commande (10), en particulier dans l'habitacle d'un véhicule à moteur, comprenant un pivot de levier (11) relié à un système de contrôle à une première extrémité (12), un pommeau (14) comprenant un alésage (21) prévu pour recevoir ledit pivot de levier (11) à une seconde extrémité (13), et un système de fixation (17, 22, 36, 38) tenant ledit pommeau (14) de façon rotationnellement et axialement fixe par rapport audit pivot de levier (11) lorsque ledit pivot de levier (11) est reçu dans ledit alésage (21), ledit pivot de levier (11) étant conçu pour être inséré dans l'alésage (21) avec un mouvement de poussée translatoire dudit pivot de levier (11) et dudit pommeau (14) l'un par rapport à l'autre, et le système de fixation (17, 22, 36, 38) étant conçu pour être mis en prise par un mouvement rotationnel dudit pommeau (14) lorsque ledit pivot de levier (11) est reçu dans ledit alésage (21), **caractérisé en ce que** ledit pivot de levier (11) comprend une partie filetée (16) destinée à venir en prise avec un filet (34) prévu dans ledit alésage (21), ledit filet (34) présentant un axe de filetage (T) qui est incliné par rapport à l'axe de l'alésage (B).

2. Un dispositif à levier de commande selon la revendication 1, dans lequel ledit système de fixation comprend un premier élément de fixation (17) accouplé audit pivot de levier (11) et un second élément de fixation (22) accouplé audit pommeau (14), lesdits éléments de fixation (17, 22) étant rotatifs l'un par rapport à l'autre d'une position non fixe, permettant l'insertion dudit pivot de levier (11) dans ledit alésage (21), à une position fixe dans laquelle lesdits éléments de fixation (17, 22) viennent en prise l'un avec l'autre pour empêcher toute rotation entre ledit pommeau (14) et ledit pivot de levier (11).

3. Un dispositif à levier de commande selon la revendication 2, dans lequel lesdits éléments de fixation (17, 22) comprennent des moyens de verrouillage (35, 38) conçus pour verrouiller lesdits éléments de fixation par rapport à la rotation relative dans ladite position fixe.

4. Le dispositif à levier de commande selon la revendication 3, dans lequel lesdits moyens de verrouillage (35, 38) comprennent au moins un élément à clip.

5. Le dispositif à levier de commande selon l'une des revendications précédentes, dans lequel ledit pommeau (14) comprend un élément à bride (22).

6. Le dispositif à levier de commande selon l'une des revendications précédentes, dans lequel ledit système de fixation comprend un élément à collet (17) fixement relié audit pivot de levier (11).

7. Le dispositif à levier de commande selon la revendication 6, dans lequel ledit élément à collet (17) comprend au moins un élément à clip (35).

8. Le dispositif à levier de commande selon l'une des revendications précédentes, dans lequel ledit dispositif à levier de commande (10) est un levier de changement de vitesse.
